# EUROPEAN PATENT APPLICATION

(11) **EP 2 796 966 A1**
(43) Date of publication of application: **29.10.2014**
(21) Application number: 14165958.1
(22) Date of filing: 25.04.2014
(51) Int. Cl.: G06F 3/01, G06F 3/0484, G06F 3/0362

(54) **Parameter setting device with tactile feedback**

(30) Priority: 26.04.2013 JP 2013093338
(71) Applicant: YAMAHA Corporation, Shizuoka 430-8650 (JP)
(72) Inventor: Nishizawa, Kazuhiko, Shizuoka-ken, Shizuoka 430-8650 (JP)
(74) Representative: Ettmayr, Andreas

(57) **Abstract**

When a knob (21) of controls (13) is operated and a parameter value corresponded to the knob (21) becomes a specific value (DV) at a time (ta4), a vibration (Sa1) of a predetermined duration (T) is given to the knob. Further, when the parameter value which has been the specific value (DV) becomes no longer the specific value (DV) at a time (ta5), a vibration (Sa2) for the duration (T) is given to the knob. A tactile impression feedback is thus given to the user, and thus it is possible to enable the user to sense that the parameter value has become the specific value (DV) or no longer the specific value (DV) without gazing at the screen on which the parameter value is displayed.

## Description

### {Technical Field}

The invention relates to a parameter setting device which gives a tactile impression feedback to a user for a predetermined duration when a parameter value changes to be in a special relation with a specific value by operation of a control by the user.

### {Background Art}

It has been conventionally known a rotary control using a rotary encoder as a control for setting a parameter. When a user operates such a rotary control, the user rotates a knob of the rotary control while watching a change of a parameter value displayed on a screen of corresponding display unit, thereby performing setting of the parameter to a predetermined value.

Further, it has been conventionally known to attach an actuator to a rotation shaft of a rotary encoder to give an external force to a rotation shaft according to a predetermined rotating state, so as to make the user operating the knob of the rotary control sense a clicking feeling, which is a required operating sense (see PTL 1).

Moreover, it has been also known to provide a vibration generating unit or a deformation unit, or further a heating/cooling unit in a main body of a mouse, which is one type of controls, and give vibration, deformation or heating sense to the hand and fingers holding the mouse by a signal from an electric computer side, to thereby allow the user to sense an approximate position of the mouse cursor without gazing at a screen of the display device, thereby reducing a burden to the eyes of the user (see PTL 2).

### {Citation List}

### {Patent Literature}

{PTL1} JP 2003-29914 A
{PTL2} JP 3280665 B2

### {Summary of Invention}

### {Technical Problem}

When a user operates a control such as a rotary control while looking at parameter values displayed on a screen, it is necessary to keep gazing at the screen, resulting in a large burden. In order to solve this, when a device is structured to give a clicking feeling to the user via the knob of the control when the parameter value set by the control reaches a specific value, the user can set the parameter value to the specific value without keep gazing at the screen. However, this structure needs a complicated mechanical structure for giving a clicking feeling to the user. Moreover, in order to prevent setting of a parameter value exceeding an upper limit or lower limit boundary value, it is necessary to inhibit rotation of the control by a brake or the like when it is attempted to exceed the boundary value, and there has been a problem that large electric power is necessary for this inhibition.

Further, also by a structure to give a vibration to the user via the knob of the control when a parameter value set with the control becomes a specific value, the user can set the parameter value to the specific value without gazing at the screen. However, in this method, there has been a problem that when a parameter which has originally been the specific value is changed to a different value, no vibration is given to the user and the user cannot recognize this.

Moreover, another structure is also conceivable that gives vibrations continuously to the user via the knob of the control while the parameter value set with the control is in a predetermined range. Also with this structure, the user can set the parameter value to a value in the predetermined range without keep gazing at the screen. However, in this method, there has been a problem that touching the knob that keeps vibrating with fingers may cause discomfort to the user operating the knob.

Accordingly, an object of the invention is to provide a parameter setting device which gives a tactile impression feedback to a user for a predetermined duration when a parameter value edited according to operation of a control by the user changes to be in a special relation with a specific value.

### {Solution to Problem}

To attain the object, a parameter setting device of the invention includes: a control operated by a user; a parameter controller that sets a parameter value according to operation on the control; and a feedback device that gives a tactile impression feedback to a user for a predetermined duration when the control is operated by the user and the parameter value which has been a specific value becomes no longer the specific value.

### {Advantageous Effects of Invention}

In the invention, when a control is operated by a user and it is detected that a parameter value which has been a specific value becomes no longer the specific value, a tactile impression feedback such as a vibration is given to the user operating the control for a predetermined duration. Thus, the user can sense that the parameter value becomes no longer the specific value without gazing at a screen on which the parameter value is displayed.

### {Brief Description of Drawings}

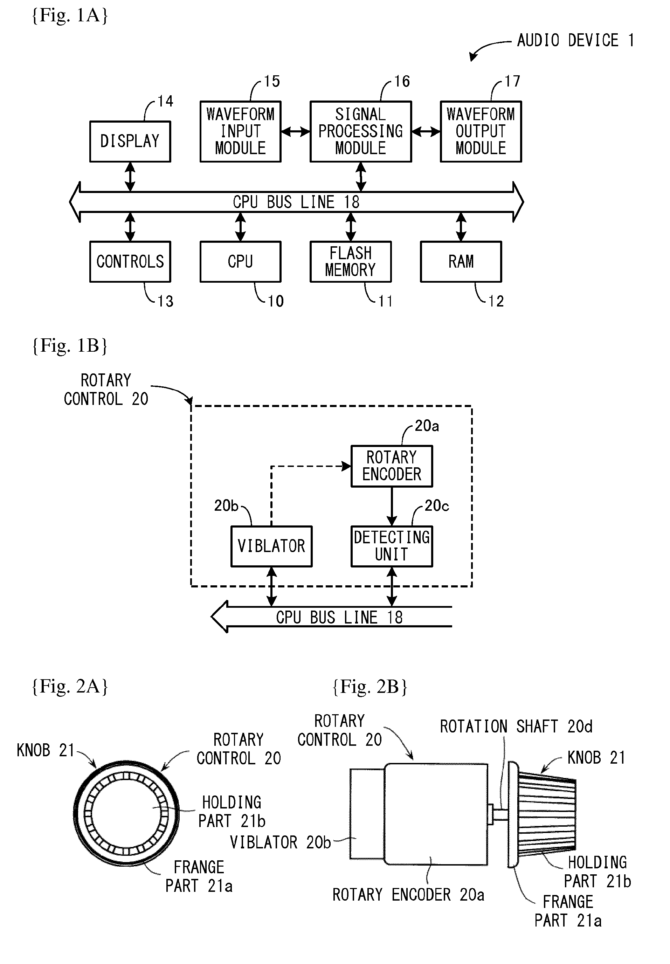

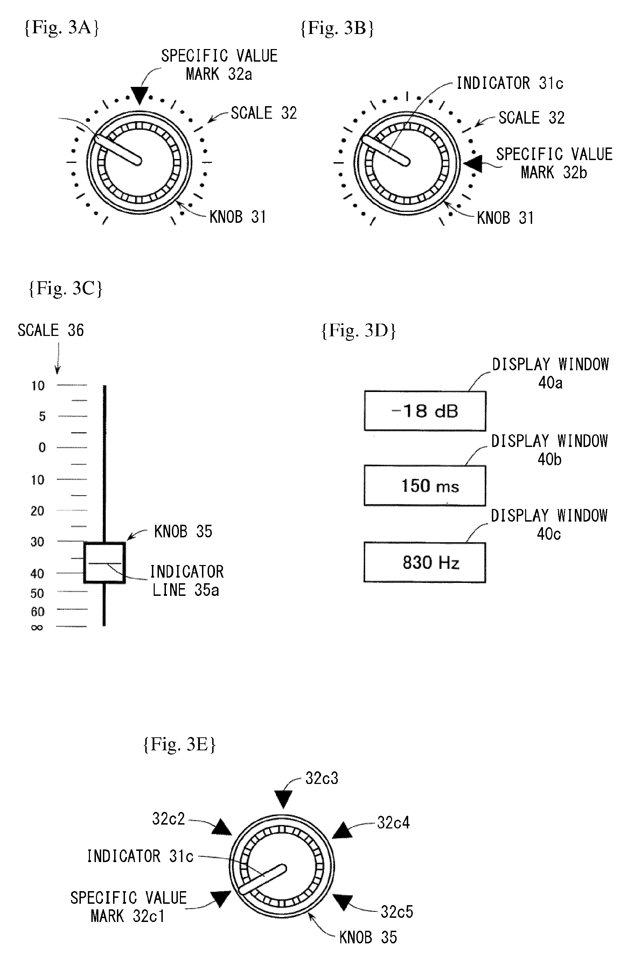

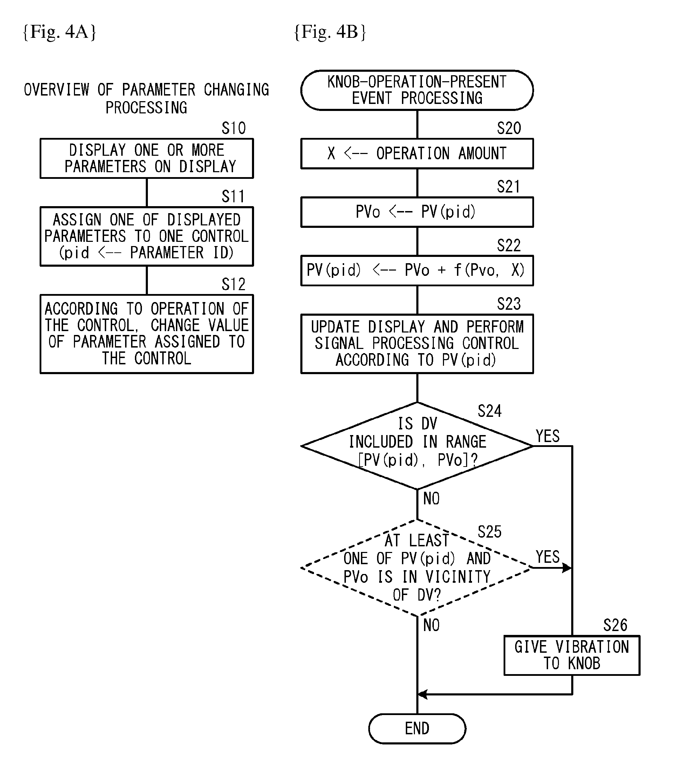

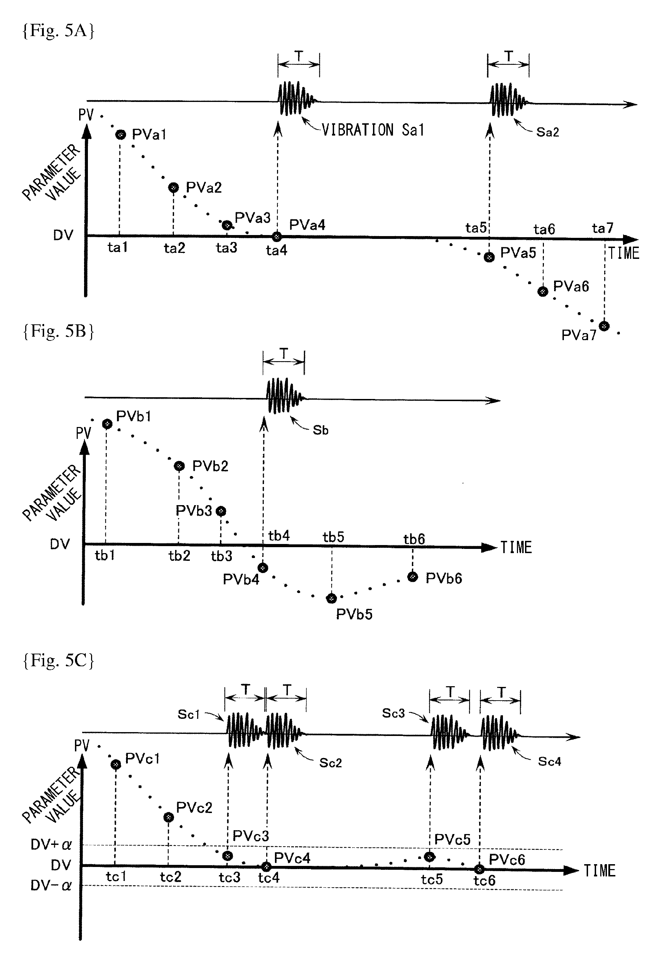

{Fig. 1A} Fig. 1A is a block diagram illustrating an example of a structure of an audio apparatus having a parameter setting device of an embodiment of the present invention.
{Fig. 1B} Fig. 1B is a block diagram illustrating an example of a structure of a control provided in the audio apparatus illustrated in Fig. 1A.
{Fig. 2A} Fig. 2A is a front view illustrating a structure of a rotary control in the parameter setting device according to the invention.
{Fig. 2B} Fig. 2B is a side view of the same.
{Fig. 3A} Fig. 3A is a diagram illustrating an example of display of a parameter value on a screen in the parameter setting device according to the invention.
{Fig. 3B} Fig. 3B is a diagram illustrating another example of display of a parameter value on a screen of the same.
{Fig. 3C} Fig. 3C is a diagram illustrating still another example of display of a parameter value on a screen of the same.
{Fig. 3D} Fig. 3D is a diagram illustrating still another example of display of parameter values on a screen of the same.
{Fig. 3E} Fig. 3E is a diagram illustrating still another example of display of a parameter value on a screen of the same.
{Fig. 4A} Fig. 4A is a flowchart of an overview of a parameter changing processing in the parameter setting device according to the invention.
{Fig. 4B} Fig. 4B is a flowchart of a "knob-operation-present event processing" executed in the parameter setting device according to the invention when there is an operation of a knob.
{Fig. 5A} Fig. 5A is a diagram illustrating an example of change of a parameter value according to operation by user and generation timings of vibrations in the parameter setting device according to the invention.
{Fig. 5B} Fig. 5B is a diagram illustrating another example of the same.
{Fig. 5C} Fig. 5C is a diagram illustrating still another example of the same.

### {Description of Embodiments}

Fig. 1A is a block diagram illustrating a structure of an audio apparatus having a parameter setting device of an embodiment of the invention. Fig. 1B is a block diagram illustrating an example of a structure of controls 13 in Fig. 1A.

The audio apparatus 1 illustrated in Fig. 1A has a CPU (Central Processing Unit) 10 controlling overall operation of the audio apparatus 1 and executing a parameter changing processing or control-operation-present event processing according to an operation of the controls 13 for setting values of parameters (parameter values) of a signal processing module INP, a rewritable non-volatile flash memory 11 storing operating software executed by the CPU 10, and a RAM (Random Access Memory) used as work areas of the CPU 10 and storing various data and the like. In the memory space of the RAM 12, an area of a current memory storing various kinds of parameter values used for controlling the current operation of the audio apparatus 1 is prepared. Note that storing the operating software in the flash memory 11 allows upgrading version of the operating software by rewriting the operating software in the flash memory 11. Further, the controls 13 include a plurality of controls, which are, for example, controls such as a rotary control or slider having a knob for setting and operating a parameter value, and a mouse, a wheel, a touch panel, a track ball, and/or the like for moving a cursor displayed on a display 14. The display 14 is constituted of a liquid crystal display device or the like which displays a setting screen for setting a parameter value, a screen displaying a parameter value which changes at a time of adjustment, and/or the like.

An audio signal is inputted from a waveform input module 15 to the audio apparatus 1, and the inputted audio signal is inputted to a signal processing module 16. The signal processing module 16 is structured using a DSP (Digital Signal Processor), and performs under control of the CPU 10 an audio signal processing such as controlling frequency characteristics, amplitude characteristics, and the like of the audio signal, adjusting localization and delay time, giving acoustic effects such as reverberation, and the like based on values of various signal processing parameters stored in the current memory. The audio signal on which the audio signal processing is performed in the signal processing module 16 is outputted to a waveform output module 17, and the audio signal is supplied to a speaker or a headphone, or supplied to a recorder or the like. These modules are connected to a CPU bus line 18.

As an example of the controls included in the controls 13, a rotary control 20 having a rotary encoder and a knob is illustrated in Fig. 1B. The rotary control 20 includes a rotary encoder 20a that generates two-phase pulses according to a rotating operation of the knob by the user and a detecting unit 20c that detects a rotation operating amount based on the two-phase pulses, and is also provided with a vibrator 20b that gives vibration to the knob. Here, when the user operates and rotates the knob of the rotary control 20 in an attempt to adjust the parameter value, an operation amount constituted of a rotation direction and a rotation amount of the rotary encoder 20a is detected by the detecting unit 20c. The CPU 10 takes in the operation amount detected in the detecting unit 20c at every predetermined time, and detects presence of an operation based on the operation amount taken in this time. As a criterion for detecting the operation may be such that, for example, "user operation absent" is determined when the operation amount taken in this time is zero and "user operation present" is determined when it is not zero. Alternatively, it may also be such that "user operation absent" is determined when the operation amount taken in this time is less than a predetermined threshold and "user operation present" is determined when it is equal to or more than the threshold. Alternatively, an operation or the operation amount of this time may be detected based on the operation amount of plural times taken in most recently. Using the threshold or considering the operation amount of plural times allows preventing erroneous detection due to noise or the like. Here, when the CPU 10 determines "user operation present", the CPU 10 executes a "knob-operation-present event processing", which will be described later. By this "knob-operation-present event processing", when the parameter value becomes a specific value, the CPU 10 sends out a control signal for driving the vibrator 20b only for a predetermined duration, and a vibration of the vibrator 20b driven is given to the user holding the knob of the rotary control 20. Further, also when a parameter value which has been a specific value becomes no longer the specific value, the CPU 10 sends out the control signal for driving the vibrator 20b only for the predetermined duration. Thus, when the parameter value becomes the specific value, and when the parameter value which has been the specific value is set to a different value from this specific value, a tactile impression feedback by vibration is given to the user temporarily via the knob only for the predetermined duration. The "predetermined duration" for which the vibration is given to the knob is a short time which allows the user operating the knob to sufficiently feel vibration of the knob.

A structure of the rotary control 20 is illustrated in Fig. 2A and Fig. 2B. Fig. 2A is a front view illustrating the structure of the rotary control 20, and Fig. 2B is a side view illustrating the structure of the rotary control 20.

As illustrated in these views, the rotary control 20 is constituted of a rotary encoder 20a having a columnar shape, a vibrator 20b provided on a rear surface of the rotary encoder 20a, a rotation shaft 20d with a small diameter projecting from substantially the center of a front face of the rotary encoder 20a, and a knob 21 attached to the rotation shaft 20d. A disc-shaped flange part 21a is formed on a bottom part of the knob 21, and a holding part 21b having a tapered shape with a diameter gradually becoming smaller toward an upper part from the flange part 21 a are formed. In a surrounding face of the holding part 21b, plural anti-slip vertical grooves are formed. The rotary control 20 is attached so that a front surface of the rotary encoder 20a is abutted on a rear surface of the panel, to thereby be housed in a not-illustrated panel of the audio apparatus 1. From a front surface of the panel, the rotation shaft 20d projects, and a knob 21 is attached to this rotation shaft 20d.

When the user holds the holding part 21b of the knob 21 and operates and rotates the knob 21 of the rotary control 20, pulses of A phase and B phase which differ in phase are generated every time it rotates by a predetermined angle and a count value of the pulses becomes the rotation amount, and the A phase is advanced or delayed from the B phase according to the rotation direction of the rotation shaft 20d. Then, the detecting unit 20c outputs an operation amount constituted of the rotation amount and the rotating direction according to the pulses, and value of the parameter is controlled according to this operation amount. Further, when the vibrator 20b is driven, vibration of the vibrator 20b is transmitted to the knob 21 via the rotary encoder 20a and the rotation shaft 20d. Note that the rotary control 20 is an endless control and the knob 21 can be rotated any number of times, where rotating rightward can produce a positive value to increase the parameter value, and rotating leftward can produce a negative value to decrease the parameter value. Further, the vibrator 20b is provided on a rear face of the rotary encoder 20a in Fig. 2B, but the vibrator 20b may be juxtaposed with the rotary encoder 20a or the vibrator 20b may be disposed inside the knob 21.

When a parameter value is set with the controls 13 such as the rotary control 20 illustrated in Fig. 2A and Fig. 2B, the current parameter value is displayed by an image and/or a numeric value on the display 14. Examples of display of a parameter value on a screen displayed on this display 14 are illustrated in Fig. 3A to Fig. 3E.

In the display image illustrated in Fig. 3A, the parameter value is displayed by the knob 31 displayed on the display 14. The knob 31 is structured similarly to the knob 21 illustrated in Fig. 2A, but has an indicator 31c indicating a scale. A background image of the knob 31 is a panel, a scale 32 is marked to surround the circular knob 31 on this panel, and the position in the scale 32 pointed by the indicator 31c of the knob 31 is the parameter value. Fig. 3A is an example of the case where the parameter is pan, LR balance, pitch shift, one of various offsets, or the like, and a specific value mark 32a indicated by a blacked-out inverted triangle is illustrated at a substantially center position (reference position) of the scale 32. For example, when the knob of the rotary control 20 illustrated in Fig. 1B is operated and rotated, the display of the knob 31 is changed to an image of the knob 31 rotated rightward or leftward according to the rotating operation, and how the parameter value indicated by the indicator 31 c changes according to the rotating operation of the knob of the rotary control 20 is displayed on the display 14. Then, as the knob 31 is rotated and the indicator 31 c points at the position of the specific value mark 32a, the vibrator 20b is driven only for the predetermined duration by control of the CPU 10, a vibration is given to the user via the knob of the rotary control 20 which the user is operating, and the user can sense that the parameter value is set to the specific value.

A display image illustrated in Fig. 3B is an example where the parameter is a level parameter used for adjusting level of an audio signal, and its detailed description is omitted since it is similar to the example illustrated in Fig. 3A except that a specific value mark 32b is at a position being further rotated by about 90° rightward (zero decibel position) from the position of the specific value mark 32a in Fig. 3a. The position in the scale 32 pointed by the indicator 31c of the knob 31 is the parameter value.

In a display image illustrated in Fig. 3C, value of a level parameter is displayed by a knob 35 which slides up and down along a straight line displayed on the display 14. On the knob 35, an indicator line 35a which is a horizontal line pointing at a scale is provided. A background image of the knob 35 is a panel, and a scale 36 of decibel scale is marked along a sliding direction of the knob 35 on this panel, and the position in the scale 36 pointed by the indicator line 35a of the knob 35 is the parameter value. When the knob of the rotary control 20 illustrated in Fig. 1B is operated and rotated, the display is changed to an image of the knob 35 slid upward or downward according to the rotating operation, and how the parameter value indicated by the indicator line 35a changes according to the rotating operation of the knob of the rotary control 20 is displayed on the display 14. Then, as the knob 35 is slid and the indicator line 35a reaches position of a specific value (for example, zero decibel) determined in advance, the vibrator 20b is driven only for the predetermined duration by control of the CPU 10, a vibration is given to the user via the knob of the rotary control 20 which the user is operating, and the user can sense that the parameter value is set to the specific value. Note that the specific value mark as illustrated in Figs. 3A, 3B may be provided on the scales 36.

In a display image illustrated in Fig. 3D, parameter values which are numeric values are displayed on display windows displayed on the display 14. In the example illustrated in Fig. 3D, three display windows 40a, 40b, 40c are displayed. For example, value of a level parameter is displayed as "-18 dB" on the display window 40a, value of a delay parameter used for controlling a delay time of an audio signal is displayed as "150 ms" on the display window 40b, and value of a frequency parameter of a filter, an oscillator or the like is displayed as "830 Hz" on the display window 40c. When the knob of the rotary control 20 illustrated in Fig. 1B is operated and rotated, value of the parameter assigned to this rotary control 20 increases or decreases according to the operation amount thereof, and when any of the parameter values displayed on the display windows 40a to 40c reach a predetermined specific value determined for the parameter in advance, the vibrator 20b is driven only for the predetermined duration by control of the CPU 10, and a vibration is given to the user via the knob of the rotary control 20 which the user is operating. Thus, the user can sense that the parameter value is set to the specific value. Here, the specific value that should cause the vibration is for example the level value of zero decibel when the assigned parameter is the level parameter, or is for example the delay value of every 10 ms (milliseconds) with ones place digit of zero when the assigned parameter is the delay parameter, or is for example a plurality of frequency values at equal intervals in a logarithmic scale when the assigned parameter is the frequency parameter. That is, the specific value can be a single value or plural values.

The example illustrated in Fig. 3E is similar to the example illustrated in Fig. 3A except that plural specific value marks 32c1, 32c2, 32c3, 32c4 and 32c5 are provided on a panel around the knob 31 instead of the scales, and thus its detailed description is omitted. However, the position pointed by the indicator 31c of the knob 31 is the parameter value.

Next, Fig. 4A illustrates a flowchart illustrating an overview of a parameter changing processing executed in the audio apparatus 1 as a processing related to the parameter setting device of the invention. This is an "overview of processing" focusing on one rotary control 20 when the user performs specific operations sequentially.

First, according to one selecting operation by the user in one of plural parameter setting screens, the CPU 10 controls the display 14 such that the display 14 displays a selected parameter setting screen displaying one or more parameter values (step S10). Then, the CPU 10 assigns one of one or more parameters displayed to the one rotary control 20 (step S11). Further, the CPU 10 records a parameter ID specifying this assigned parameter as a static variable pid in the current memory. Then, when the knob 21 of the rotary control 20 is operated, the CPU 10 changes value of the parameter assigned to the rotary control 20 in the current memory according to the operation amount thereof (step S12). In this case, display style of respective parameters on the display 14 is any of the styles illustrated in Fig. 3A to Fig. 3E according to the respective parameters displayed.

The CPU 10 takes in respective operation amounts of the plural controls 13 at every predetermined time, and judges whether or not there is an operation of the controls 13 by the user based on the operation amounts. Then, when the CPU 10 detects that there is an operation of the controls 13, the CPU 10 executes a "control-operation-present event processing" with respect to the operated control. The "knob-operation-present event processing" illustrated in Fig. 4B is an example of this processing, and is executed when the knob 21 of the rotary control 20 is operated.

Next, this "knob-operation-present event processing" will be described, and in this description, a specific example will be described with reference to graphs illustrated in Fig. 5A to Fig. 5C. The graphs of Fig. 5A to Fig. 5C respectively illustrate different examples of changes of values of the parameter assigned to the rotary control 20 when the user operates the knob 21 of the rotary control 20, and timings of occurrence of vibration of the vibrator 20b of the rotary control 20. In these graphs, DV represents the value of the parameter at which a tactile impression feedback is given to the user, that is, the specific value. Further, each circle illustrated in the graphs of Fig. 5A to Fig. 5C denotes a setting timing and a set value of the parameter by the CPU 10, and each dashed line indicates a change in value of the parameter when it is assumed that the value is changed by a continuous processing rather than the discrete processing at every predetermined time.

The operation amount when the knob 21 is rotated is detected by the detecting unit 20c illustrated in Fig. 1B, and is periodically taken in by the CPU 10. Here, when the knob 21 of the rotary control 20 is rotated, the CPU 10 detects that there is an operation of the knob 21 of the rotary control 20 based on the operation amount taken in, and starts the "knob-operation-present event processing". When the "knob-operation-present event processing" is started, the CPU 10 takes in the rotation operation amount of the knob 21 by the user, and substitutes the operation amount into a temporary variable X (step S20). This operation amount X is a positive value when the knob 21 is rotated rightward, or is a negative value when the knob 21 is rotated leftward. Next, based on the static variable pid, the CPU 10 reads a value PV(pid) of the parameter assigned to the rotary control 20 from the current memory, and substitutes the value PV(pid) into a temporary variable PVo as a parameter value before operating the knob 21 (step S21). Then, the CPU 10 calculates the sum of the parameter value PVo and the value of the function f(PVo, X) described later in step S22, and updates the parameter value PV(pid) of the current memory with the calculated sum. A parameter generally has an upper limit value and/or a lower limit value, and a variation range of the parameter is up to or down to a boundary value which is the upper limit value or the lower limit value. However, since the rotary control 20 is an endless control which can be operated and rotated any number of times, it is possible that the parameter value after operation exceeds the boundary value depending on the operation amount X. Here, the parameter value after operation is adjusted

so as not to exceed the boundary value by using the function f(PVo, X). That is, when the parameter value PVo before operation is a boundary value, if the knob 21 is operated in a direction that causes the parameter value to be out of the boundary value, the value of the function f(PVo, X) with respect to the operation amount X becomes zero, resulting in that the parameter value PV(pid) after operation does not exceed the boundary value. Further, when the parameter value PVo before operation has not reached the boundary value but the sum with the function f(PVo, X) with respect to the operation amount X exceeds the boundary value, the value of the function f(PVo, X) with respect to the operation amount X is adjusted so that the sum of the parameter value PVo and the value of the function f(PVo, X) will become the boundary value, resulting in that the parameter value PV(pid) after operation does not exceed the boundary value. Note that other than the vicinity of the boundary value, the function f(PVo, X) may be a function which is linearly in proportion to the operation amount X, or may be a function whose gradient changes according to the operation amount X. A representative one as the latter is what is called an accelerating type function which causes the gradient to become steep as the absolute value (= rotation amount) of the operation amount X becomes larger, in order to make a small adjustment and a large numeric value change compatible.

Describing the processings of step S20 to step S22 with reference to the graph of Fig. 5A, when the operation amount X is taken in from the detecting unit 20c at time ta2 in step S20, PVa1 which is the parameter value at time ta1 becomes the parameter value PVo before operation in step S21, and the sum of the PVa1 and the value of the function f(PVo, X) is calculated in step S22. The calculated PV(pid) becomes a parameter value PVa2 after operation at time ta2. Processings executed at time ta1 and times ta3 to ta7 are similar to the aforementioned processing executed at time ta2, and it is assumed that the time just before time ta1 is ta0 and the parameter value at time ta0 is PVa0, the sum of the value of the function f(PVo, X) with respect to each operation amount X of the knob 21 taken in at each time ta1, ta3 to ta7 and the parameter value PVo (PVa0 and PVa2 to PVa6) before operation is calculated, and becomes PVa1 and PVa3 to PVa7 which is the parameter value PV(pid) after operation. Thus, the parameter value at each time ta1 to ta7 becomes PVa1 to PVa7. At this time, in the example illustrated in Fig. 5A, the parameter value after operation does not exceed the boundary value at any time, and thus the value of the function f(PVo, X) becomes larger as the operation amount becomes larger, and smaller as the operation amount becomes smaller. Note that the reason why there is a time gap between time ta4 and time ta5 is that although the operation amount of the knob 21 is taken in at every predetermined time, "no operation" is judged from time ta4 to time ta5, and the "knob-operation-present event processing" is not executed.

The processings of step S20 to step S22 in the graph of Fig. 5B are similar to that of above-described Fig. 5A and hence their detailed descriptions are omitted, but the parameter value PV(pid) is adjusted according to the operation amount X of the knob 21 at each point tb1 to tb6, and the parameter value at time tb1 to tb6 after operation becomes PVb1 to PVb6. Further, the processings of step S20 to step S22 in Fig. 5C are similar to that of above-described Fig. 5A and hence their detailed descriptions are omitted, but the parameter value PV(pid) is adjusted according to the operation amount X of the knob 21 at each point tc1 to tc6, and the parameter value at time tc1 to tc6 after operation becomes PVc1 to PVc6.

After the processing of step S22 finishes, in step S23, the CPU 10 updates the corresponding parameter display of the display 14 according to the parameter value PV(pid) after operation calculated in step S22, and moreover, signal processing control with the parameter value PV(pid) after operation is performed in the signal processing module 16. Then, the CPU 10 judges whether DV as a specific value is included in a range [PV(pid), PVo] or not in step S24. In this case, the symbol [ ,] denotes a range including the boundary values. Then, when DV as the specific value is included in the range between the parameter value PV (pid) after operation calculated in step S22 and the parameter value PVo before operation, result of the judgment in step S24 is "YES" and the flow branches to step S26. Note that result of the judgment in step S24 becomes "YES" in the case where the parameter value PV(pid) after operation matches DV, and the case where the parameter value PV(pid) after operation is beyond DV from the parameter value PVo before operation, and moreover the case where the parameter value PVo before operation matches DV. In step S26, the CPU 10 gives the control signal to the rotary control 20 for driving the vibrator 20b only for the predetermined duration, and a vibration is given to the knob 21 only for the predetermined duration. Note that where the parameter value PV(pid) after operation is beyond DV from the parameter value PVo before operation, giving a vibration to the knob 21 is not mandatory. The vibration may be given when DV matches the parameter value PV(pid) after operation or the parameter value PVo before operation, or the vibration may be given when at least one of the parameter value PV(pid) after operation and the parameter value PVo before operation is in the vicinity of DV.

Describing processings of step S24 and step S26 with reference to the graph of Fig. 5A, PVa4 which is a parameter value after operation becomes DV at time ta4, and hence result of the judgment in step S24 is "YES". Thus, the CPU 10 sends out the control signal for driving the vibrator 20b only for a predetermined duration T in step S26, and a vibration Sa1 for the duration T is given to the knob 21. Thus, when the parameter value after operation becomes DV as a specific value, the tactile impression feedback is given for the predetermined duration T to the knob 21, and the user operating the knob 21 can sense that the adjusted parameter value has become the specific value. Further, since the parameter value PVo before operation is DV at time ta5, result of the judgment in step S24 is "YES", and a vibration Sa2 for the predetermined duration T is given to the knob 21 in step S26. Thus, when the parameter value after operation becomes from DV as the specific value to a different value, the tactile impression feedback for the predetermined duration T is given to the knob 21, and the user operating the knob 21 can sense that the parameter value being adjusted has become a different value from the specific value. Note that result of the judgment in step S24 is "NO" at any time except ta4 and ta5, and the processing of step S26 is not performed. Note that the predetermined duration T for which a vibration is given to the knob 21 is a short time that allows the user operating the knob 21 to sufficiently sense that the knob 21 is vibrating and is, for example, several tens of milliseconds to several hundreds of milliseconds.

Next, describing the processings of step S24 and step S26 with reference to the graph of Fig. 5B, at time tb4, the parameter value PVo before operation is PVb3 exceeding DV, and the parameter value PV(pid) after operation is PVb4 which is less than DV. Accordingly, the parameter value PVb4 after operation is beyond DV from the parameter value PVb3 before operation. Thus, result of the judgment in step S24 is "YES", and a vibration Sb is given for the predetermined duration T to the knob 21 in step S26. In this manner, when the parameter value is changed across DV as a specific value, the tactile impression feedback for the predetermined duration T is given to the knob 21, and the user operating the knob 21 can sense that the parameter value being adjusted is changed across DV as the specific value. Note that, as to enabling the user to sense the change of the parameter value across DV, since the operation amount X is taken at every predetermined time and is not a temporally continuous processing, when the operation amount per time is large, the parameter value PV changes to skip DV as illustrated in Fig. 5B. In this case, in conventional techniques, vibration is not given to the knob 21 and the user cannot perceive that the parameter value is adjusted across DV as the specific value. However, in the parameter setting device according to the invention, the user can sense that the parameter value is adjusted across DV as the specific value. Further, at any time except tb4, result of the judgment in step S24 is "NO", and the processing of step S26 is not performed.

Descriptions of processings of step S24 and step S26 with reference to Fig. 5C will be given later in a description of a processing of step S25.

When result of the judgment in step S24 is "NO", the flow proceeds to step S25. Here, when the parameter value PV(pid) after operation calculated in step S22 is included in a range of DV ± α which is the vicinity of the specific value DV, result of the judgment in step S25 is "YES" and the flow branches to step S26. In step S26, as described above, the CPU 10 gives the control signal to the rotary control 20 for driving the vibrator 20b only for the predetermined duration, and a vibration is given to the knob 21 only for the predetermined duration. However, the processing of step S25 is not mandatory, and the "knob-operation-present event processing" of Fig. 4B may be a processing not including step S25. For example, when the resolution of the detected operation amount is low or when the resolution of the operation amount is rounded off and decreased, the processing of step S25 is substantially included in the processing of step S24, and hence can be omitted. Alternatively, when two values PV(pid), PVo are respectively rounded off to temporarily generate two values PVx(pid), PVxo with reduced resolutions in step S24, and judgment of step S24 is performed based on the specific value DVx with a low resolution and these two values PVx(pid), PVxo, the processing of step S25 can be omitted similarly. As long as the user is able to sense a match between the parameter value and the specific value DV by a vibration in a range that can be felt as one value, any one of them can be employed. This rounding off may be performed by an arbitrary method such as cutting off, rounding off, or the like of low-order bits.

Since Fig. 5C is presented as an example for describing the processing of step S25, processings of step S25 and step S26 will be described with reference to the graph of Fig. 5C. Since PVc3 which is a parameter value after operation is included in the range of DV ± α at time tc3, result of the judgment in step S25 is "YES". Thus, the CPU 10 sends out the control signal for driving the vibrator 20b only for the predetermined duration T in step S26 as described above, and a vibration Sc1 is given to the knob 21 for the predetermined duration T. Further, since the parameter value after operation is included in the range of DV ± α after operation at times tc4, tc5, tc6, result of the judgment in step S25 is "YES", and vibrations Sc2, Sc3, Sc4 for the predetermined duration T are given to the knob 21 at respective times in step S26. Thus, when the parameter value after operation is adjusted to be included in the range of DV ± α, the tactile impression feedback for the predetermined duration T is given to the knob 21, thereby allowing the user operating the knob 21 to sense that the parameter value being adjusted is included in the range of DV ± α. Note that at times tc1 and tc2, results of both of the judgments in steps S24 and S25 are "NO", and the processing of step S26 is not performed.

Here, when the parameter value after operation is included in the range of DV ± α, a vibration is applied to the knob 21. However, together with or instead of this, vibration may be applied to the knob 21 when the parameter value before operation is included in the range of DV ± α.

Note that when the CPU 10 detects "operation present" sequentially based on the operation amount of the knob 21 which is taken in, and either of results of the judgments in steps S24 and S25 is "YES" in the "knob-operation-present event processing" (Fig. 4B) executed sequentially in sequential judgment of operation present, vibrations given to the knob 21 in advance or subsequently by the processing of step S26 substantially overlap and become one.

The "knob-operation-present event processing" is finished when result of the judgment in step S25 is "NO" in the case of performing the processing of step S25, or when result of the judgment in step S24 is "NO" in the case of not performing the processing of step S25, or when the processing of step S26 is finished if either of results of the judgments in steps S24 and S25 is "YES".

In this processing, the specific value DV used as a threshold for determining to give a vibration to the knob 21 is used with a certain width (α). Then, this width (α) is adjusted to an appropriate width (about several degrees to 20 degrees by the rotating angle of the knob 21) which is not too wide and is to an extent recognized as one value by the user. It is preferable that the width (α) is smaller when the diameter of the knob 21 is large, or the width (α) is larger when the diameter is small. Thus, the specific value DV need not necessarily be a single value, and may be a continuous value within a range having the width (α).

Further, the predetermined duration T of vibration illustrated in Fig. 5A to Fig. 5C is, for example, several tens of milliseconds to several hundreds of milliseconds, but the vibration may be generated to partially overlap in time with the next vibration.

As has been described above, the audio apparatus 1 having the parameter device of the embodiment of the invention has a control operated by a user, a parameter controller that sets a value of parameter (a parameter value) according to operation on the control, and a feedback device that gives a tactile impression feedback to the user only for a predetermined duration when the control is operated by the user and it is detected that a parameter value which has been a specific value becomes no longer the specific value. In the parameter setting device according to the invention, the "control" and the "parameter controller" are realized by cooperation of the knob 21, the rotary encoder 20a, the detecting unit 20c, the CPU 10, the flash memory 11, and the RAM 12 in the above-described embodiment, and the "feedback device" is realized by cooperation of the CPU 10, the flash memory 11, the RAM 12, the vibrator 20b, and the knob 21 in the above-described embodiment.

### {Industrial Applicability}

The parameter setting device according to the invention as described above is realized by cooperation of the hardware and the software related to the control. However, a part or all of the processing realized by the software may be replaced with an LSI (Large Scale Integration), a logic circuit, or the like.

In the parameter setting device according to the invention as described above, the control is not limited to the rotary control and may be a different endless control. Further, although a relative value type control in which a relative value (change amount) of an operating position is detected is used in the above embodiment, an absolute value type control in which an absolute value of an operating position is detected may be also used. For example, a fader control, a lever control, a joystick, a rotation type variable resistor, a ribbon controller, a touch panel, or the like may be applied as the control.

Note that although a two-phase incremental type rotary encoder is used as the rotary encoder 20a in the above embodiment, a three-phase incremental type generating three-phase pulses may be also used. Alternatively, an encoder of absolute type outputting an absolute position may also be used.

In an audio apparatus having the parameter setting device of the embodiment of the invention as described above, various level parameters for controlling the audio signal processing exist, and the level parameter assigned to the rotary control 20 may be any one of these level parameters.

Although the parameter setting device according to the invention is applied to an audio apparatus, the parameter setting device according to the invention is applicable to electronic devices and electric devices for various applications in which a parameter value is set with a control. For example, it may be applied to a personal computer, a tablet terminal, a mobile phone, or the like. Alternatively, the parameter setting device according to the invention may be an independent device or piece of software.

Further, the parameter set with the control is not limited to a parameter for audio signal control, and can be parameters of various applications such as video control, document processing, communication control, motor control, illumination control, and so on.

Moreover, although the vibrations of the vibrator are the same between the case where the parameter value becomes a specific value and the case where the parameter value becomes a different value from the specific value, the vibrations of those cases may be different so as to enable the user to distinguish which case has occurred when the tactile impression feedback is received. In this case, the vibrations of those cases can be distinguished by differentiating durations between those cases, making the vibration repeat turning on/off during the duration of one of those cases, or differentiating the numbers of turning on/off between those cases.

Furthermore, two or more specific values used as thresholds for determining to give the tactile impression feedback may be set for one parameter, and the tactile impression feedback by a feedback device may be given for each of the specific values.

### {Reference Signs List}

1 ... audio apparatus, 10 ... CPU, 11 ... flash memory, 12 ... RAM, 13 ... controls, 14 ... display, 15 ... waveform input module, 16 ... signal processing module, 17 ... waveform output module, 18 ... CPU bus line, 20 ... rotary control, 20a ... rotary encoder, 20b ... vibrator, 20c ... detecting unit, 20d ... rotation shaft, 21 ... knob, 21a ... flange part, 21b ... holding part, 31 ... knob, 31c ... indicator, 32 ... scale, 32a ... specific value mark, 32b ... specific value mark, 32c ... specific value mark, 35 ... knob, 35a ... indicator line, 36 ... scale, 40a ... display window, 40b ... display window, 40c ... display window

## Claims

1. A parameter setting device, comprising:
a control (20) operated by a user;
a parameter controller that sets a parameter value (PV) according to operation on the control (20); and
a feedback device that gives a tactile impression feedback (S26) to a user for a predetermined duration (T) when the control (20) is operated by the user and the parameter value (PV) which has been a specific value (DV) becomes no longer the specific value (DV).

2. The parameter setting device according to claim 1,
wherein the feedback device further gives the tactile impression feedback (S26) to the user for a predetermined duration (T) when the control (20) is operated by the user and the parameter value (PV) which has not been the specific value (DV) becomes the specific value (DV).

3. The parameter setting device according to claim 1 or 2,
wherein the feedback device further gives the tactile impression feedback (S26) to the user for a predetermined duration (T) when the control (20) is operated by the user and the parameter value (PV) changes across the specific value (DV).

4. The parameter setting device according to any one of claims 1 to 3,
wherein the specific value (DV) is a single value or continuous values in a predetermined range.
